## Europäisches Patentamt
## European Patent Office
## Office européen des brevets

(19)

(11) Veröffentlichungsnummer: **0 164 111**
B1

(12) # EUROPÄISCHE PATENTSCHRIFT

(45) Veröffentlichungstag der Patentschrift:
06.09.89

(21) Anmeldenummer: 85106971.6

(22) Anmeldetag: 05.06.85

(51) Int. Cl.⁴: **F 24 F 5/00, F 24 F 11/00, E 06 B 3/26, E 06 B 7/00**

(54) Schall-und Wärmeisolierendes Verbundfenster mit Schalldämmlüftung.

(30) Priorität: 08.06.84 DE 3421361

(43) Veröffentlichungstag der Anmeldung:
11.12.85 Patentblatt 85/50

(45) Bekanntmachung des Hinweises auf die Patenterteilung:
06.09.89 Patentblatt 89/36

(84) Benannte Vertragsstaaten:
AT CH DE FR GB LI

(56) Entgegenhaltungen:
EP-A- 0 093 364
DE-A- 2 642 266
DE-A- 3 124 334

Recknagel-Sprenger, Taschenbuch für Heizung und
Klimatechnik, 60. Ausgabe, 1979, R. Oldenburg,
München, Wien, Seiten 1100, 1101.

(73) Patentinhaber: Wetzel, Alfred, Dipl.-Ing.,
Weissdornweg 114, D-5300 Bonn 2 (DE)

(72) Erfinder: Wetzel, Alfred, Dipl.-Ing., Weissdornweg 114,
D-5300 Bonn 2 (DE)

(74) Vertreter: Schwarz, Klaus-Jürgen, Dipl.-Ing.,
Gluckstrasse 7, D-5300 Bonn 1 (DE)

## Beschreibung

Die Erfindung betrifft ein schall- und wärmeisolierendes Verbundfenster oder Türelement nach dem Oberbegriff des Anspruches 1 und geht aus vom Stand der Technik nach EP-A-0 093 364 A2.

Wie Untersuchungen gezeigt haben, werden die Lüftungswärmeverluste von beheizten Aufenthaltsräumen künftig immer bedeutsamer, weil die Transmissionswärmeverluste wegen der verbesserten Wärmedämmung der Außenwände und Fenster wesentlich zurückgegangen sind und oft nur noch etwa die Hälfte des Gesamtwärmeverlustes ausmachen. Deshalb können weitere Energieeinsparungen nur dort erwartet werden, wo durch eine kontrollierte mechanische Bedarfslüftung die Lüftungswärmeverluste reduziert werden.

Alle einschlägigen Untersuchungen bestätigen die Zweckmäßigkeit von fugendichten Fenstern, wenn der Benutzer durch Stoßlüftung und steuerbare Feinlüftung ein gesundes Raumklima schafft. Dabei wird die sogenannte Kippstellung des Fensters als Lüftungsstellung über einen längeren Zeitraum kritisch als energievergeudend angesehen.

Durch z.B. falsches Lüften und zu sparsames Heizen entsteht in Aufenthaltsräumen oft eine zu hohe Luftfeuchte, die sich an den zu kalten Außenwänden innen als Wasser abschlägt und mit Tapete und Farbe einen idealen Nährboden für Schimmelpilze bilden kann. Schimmelpilze mit ihren Sporen sind zum Teil gesundheitsgefährdend für den Benutzer. Zudem wird auch das Außenmauerwerk feucht, kann Schaden nehmen, die Wärmedämmung läßt nach und die Heizkosten erhöhen sich.

Die mit einem ungünstigen Raumklima verbundenen Probleme sind auch von Stallklimaanlagen her bekannt. So ist in der DE-OS 3 124 334 eine Stallklimaanlage mit mehreren Meßwertgebern für verschiedene Klima-Meßgrößen, mehreren, verschiedenartige Stellgrößen liefernden Stellgliedern und zumindest einem Regler für die meßgrößenabhängige Stellglied-Ansteuerung, wie sie beispielsweise für Fest- und Grenzwertregelungen einzelner Klimawerte bekannt ist, beschrieben. Diese bekannte Stallklimaanlage ist so ausgelegt, daß sie das von verschiedenen Klimagrößen abhängige Wohlbefinden der Tiere besser berücksichtigt, indem mehrere verschiedene Klima-Meßgrößen zu zumindest einem der Regler zusammengeführt und in diesem zur Bildung zumindest eines kombinierten Klimawertes verknüpft sind, aufgrund dessen der Regler verschiedene Stellsignale an die Stellglieder ausgibt. Die Klima-Meßgrößen können neben der Stallufttemperatur auch Wandtemperaturen, die Stalluftfeuchte, die Ionenkonzentration in der Stalluft sowie Licht- oder elektrische Strahlung erfassen und durch weitere Meß- oder Eingabewerte, wie etwa für den Besatz des Stalles typische Werte, beeinflußt werden.

Eine derartige Stallklimaanlage ist allerdings in ihrem Aufbau verhältnismäßig kompliziert und erfordert jeweils ganz spezielle und äußerst aufwendige Installationsarbeiten, die im Wohnraumbereich in dieser Form nicht in Frage kommen.

Aus dem Taschenbuch für Heizung und Klimatechnik, 60. Ausgabe 1979, Seiten 1100 und 1101, sind Fenster- und Raumklimageräte mit Kältemittel-Kreislauf und Oberflächenkühler zur Lüftung und Kühlung einzelner Räume, wie Büroräume, Wohnzimmer oder dergleichen, bekannt, wobei solche Fenster-Klimageräte mit eingebauter Kältemaschine in der Regel auf das Fensterbrett gestellt werden. Auch die Anordnung in einer Wand ist möglich, während Raumklimageräte, auch Klimakühler oder Luftkühltruhen genannt, in derselben Art wie Heizungstruhen gebaut sind und gewöhnlich unter den Fenstern aufgestellt werden, falls eine andere Aufstellungsmöglichkeit nicht besteht. Solche Geräte enthalten im Inneren einen hermetisch geschlossenen Frigen-Kompressor, einen luftgekühlten Kondensator, den Verdampfer, ein oder zwei Ventilatoren, eventuell einen elektrischen Lufterhitzer sowie die erforderlichen Regelorgane, die nach den Seiten 1119 und 1120 der genannten Literaturstelle in der Lüftungs- und Klimatechnik dazu dienen, die Lufttemperatur und -feuchte selbsttätig auf den vorgeschriebenen Werten zu halten. Solche Fenster- und Raumklimageräte sind in ihrer Konstruktion aufwendig und sperrig und können daher nicht in schall- und wärmeisolierende Verbundfenster oder Türelemente nach dem Oberbegriff des Anspruches 1 integriert werden.

Aus der europäischen Patentanmeldung EP-A-0 093 364 A2 ist ferner ein schall- und wärmeisolierendes Verbundfenster mit Schalldämmlüftung nach dem Oberbegriff des Anspruches 1 bekannt, bei dem am Hauptflügel des Verbundfensters das Flügelunterstück und das Flügeloberstück ebenso wie die beiden Flügelseitenstücke aus einem zum Scheibenzwischenraum hin offenen, U-förmigen Schachtprofil bestehen, das an seiner offenen Seite durch eine Abdeckung mit den Luftdurchlässen zum Scheibenzwischenraum abgeschlossen ist, so daß die drehbaren Kerne oder Walzen der unteren und der oberen Lüftungseinheiten in einfacher Weise von der offenen Profilseite her eingebaut werden können. In den Flügelseitenstücken sind horizontal ausziehbare Rolloeinsätze angeordnet, deren Rollobahnen den Scheibenzwischenraum nach Bedarf mehrfach unterteilen lassen, so daß trotz Einfachverglasung der beiden Nebenflügel der Effekt von Isolierverglasungen erreicht wird. Sowohl die Lüftungseinheiten als auch die Rolloeinsätze, die mit reflektierenden und zum Teil lichtdurchlässigen Folienbahnen ausgestattet sein können, erlauben eine Vielzahl unterschiedlicher Lüftungsstellungen, die den unterschiedlichen Jahreszeiten, bei Bedarf auch mit Wärmerückgewinnung, leicht angepaßt werden können.

Der Erfindung liegt die Aufgabe zugrunde, ein schall- und wärmeisolierendes Verbundfenster oder Türelement mit Schalldämmlüftung nach dem Oberbegriff des Anspruches 1 in platzsparender, auch zur Nachrüstung geeigneter Bauweise so auszubilden, daß eine automatische Be- und/ oder Entlüftung der Aufenthaltsräume bei geschlossenen und dichten Fenstern entsprechend den gemessenen Klimawerten gewährleistet ist, um unter Berücksichtigung des jeweiligen Außen- und Innenklimas bei gleichzeitiger Minimierung des Lüftungs-Wärmeverlustes den zum Wohle der Benutzer erforderlichen Mindestluftwechsel sicherzustellen.

Diese Aufgabe wird erfindungsgemäß durch den Kennzeichnungsteil des Anspruches 1 gelöst, während in den Ansprüchen 2 bis 14 besonders vorteilhafte Weiterbildungen der Erfindung gekennzeichnet sind.

Durch die Erfindung eröffnen sich zahlreiche Möglichkeiten für eine äußerst wirtschaftliche Lösung der Lüftungsfragen am Fenster bis zu einer perfekten Sonnenenergienutzung und Wärmerückgewinnung aus der Raumluft, wobei die Möglichkeiten von besonderem Vorteil sind, die sich durch die Steuerung der Lüftungseinrichtungen und der vorhandenen auf- und abrollbaren, durchsichtigen und zum Teil wärmereflektierenden und -absorbierenden Schutzbahnen in Abhängigkeit von den durch den Steuerteil und die damit verbundenen Sensoren erfaßten und verwerteten Klimadaten ergeben.

Das Einbaugerät hat darüber hinaus den besonderen Vorteil, daß es neben der Fenster-Be- und Entlüftung auch die Heizung bedienen kann und zeichnet sich in seiner vollkommensten Ausführungsform durch eine Maximierung des Sonnenenergiegewinnes und der Heizenergie-Einsparung unter gleichzeitiger Wärmerückgewinnung bei optimaler Aufrechterhaltung des Kälte-, Wärme-, Sonnen- und Schallschutzes sowie des Schutzes vor Schadstoffen in der Raumluft aus.

Die Kosten für das Gerät sind dabei nicht so hoch, als daß sie durch die hohen Energiepreise nicht bald wieder eingespart werden könnten.

Bevorzugte Ausführungsbeispiele der Erfindung sind in der Zeichnung schematisch dargestellt. Es zeigen

Fig. 1 eine Innenansicht eines Fensters, das nach Art eines speziellen Verbundfensters ausgebildet ist und ein Einbaugerät im Scheibenzwischenraum aufweist,

Fig. 2 eine Seitenansicht des Fensters in Richtung des Pfeiles II von Fig. 1,

Fig. 3 eine Draufsicht auf das Fenster in Richtung des Pfeiles III von Fig. 1,

Fig. 4 einen gegenüber den Darstellungen von Fig. 1 bis 3 vergrößerten Teilschnitt durch ein derartiges Fenster gemäß Schnittlinie IV–IV von Fig. 1,

Fig. 5 einen weiteren derartigen Teilschnitt durch ein Fenster mit einem gegenüber Fig. 1 bis 4 abgewandelten Gerät,

Fig. 6 eine teilweise Außenansicht auf die Steuereinheit des Einbaugerätes von der Fensteraußenseite her,

Fig. 7 weitere Einzelheiten des Einbaugerätes von der Fensterinnenseite her,

Fig. 8 einen Teilschnitt durch das Einbaugerät gemäß Schnittlinie VIII–VIII von Fig. 7,

Fig. 9 ein elektrisches Blockschaltbild für ein derartiges, in ein spezielles, mit Lüftungseinrichtungen ausgerüstetes Verbundfenster eingebautes Gerät zur Be- und/oder Entlüftung mit Anschlußmöglichkeit an einen sogenannten Klimawächter,

Fig. 10 ein weiteres elektrisches Blockschaltbild für ein in ein spezielles Verbundfenster eingebautes Einbaugerät zur Be- und/oder Entlüftung mit integriertem Klimawächter,

Fig. 11 eine vereinfachte Darstellung des speziellen Verbundfensters von Fig. 4 mit dem abgewandelten Einbaugerät nach Fig. 5 bei geschlossener Scheibenzwischenraum-Durchlüftung und

Fig. 12 eine Darstellung nach Fig. 11, jedoch bei von der Fensteraußenseite unten zur Fensterinnenseite oben her geöffneter Scheibenzwischenraum-Durchlüftung.

Das in der Zeichnung gezeigte Einbaugerät 2 ist mit einem sogenannten Klimawächter, wie er in der DE-OS 3 300 389 beschrieben ist, ausgestattet mit Einrichtungen insbesondere zum Messen der Innenraum-Lufttemperatur, der Innenraum-Luftfeuchte und der Schadstoffdichte der Raumluft, der die gemessenen Lufttemperatur- und Feuchtigkeitswerte erfaßt und die Behaglichkeitskoordinaten aus Lufttemperatur und relativer Luftfeuchte ständig berechnet, wobei die Meßeinrichtungen in einem gemeinsamen langgestreckten Gehäuse 112 mit einem Anschluß an eine Energiequelle und mit einem Mikroprozessor angeordnet sind. Die Behaglichkeitskoordinaten sind dabei im Behaglichkeitsfeld durch Programmierung des Mikroprozessors derart festgelegt, daß beim Erreichen von Grenzwerten, die sich aus der gemessenen Raumlufttemperatur und der relativen Luftfeuchte ergeben, elektrische Warnleuchten 20, 21, 22, 23 aufleuchten, von denen mindestens eine Warnleuchte 20 für den Hinweis «H» gleich HEIZEN, mindestens eine zweite Warnleuchte 21 für den Hinweis «L» gleich LÜFTEN, mindestens eine dritte Warnleuchte 23 für den Hinweis «K» gleich KÜHLEN und mindestens eine vierte Warnleuchte 22 mit dem Hinweis «S» auf die Überschreitung einer verträglichen Schadstoffdichte in der Raumluft vorgesehen ist.

Das Einbaugerät 2 führt die gemessenen Werte als Impulse einer Vorrichtung 110a zur automatischen Be- und/oder Entlüftung bei geschlossenen und dichten Fenstern zu, deren funktionsnotwendige Teile an dem Verbundfenster oder Türelement 120 entsprechend den Darstellungen in der Zeichnung im wesentlichen im oberen Teil des Fenster- oder Türflügels 120a angeordnet sind.

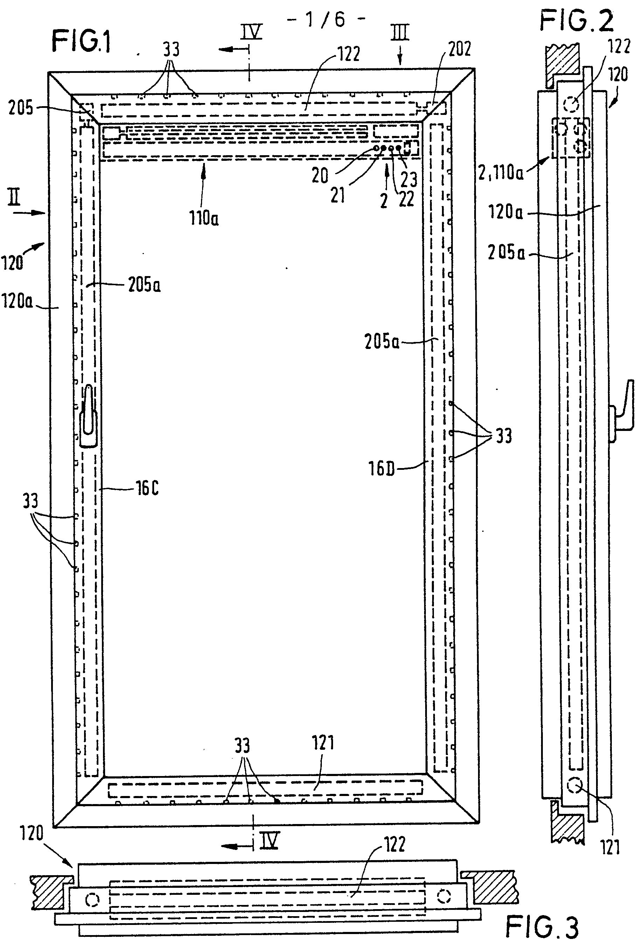

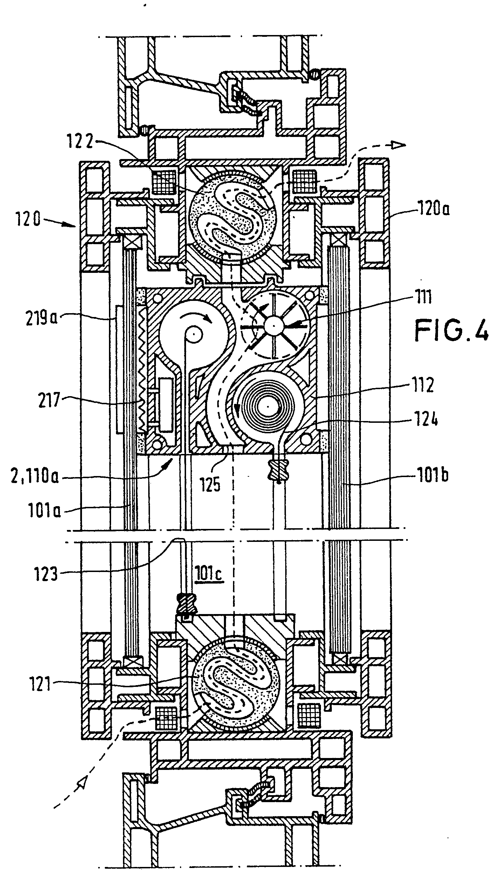

Wie in Fig. 1 und 2 gezeigt ist, bildet das Einbaugerät 2 mit der Vorrichtung 110a eine Baueinheit 2, 110a und ist als Steuereinheit mit einem motorisch betriebenen Lüfter 111 (Fig. 4) verbunden, der sich im wesentlichen über die gesamte Breite des Fenster- oder Türflügels 120a erstreckt.

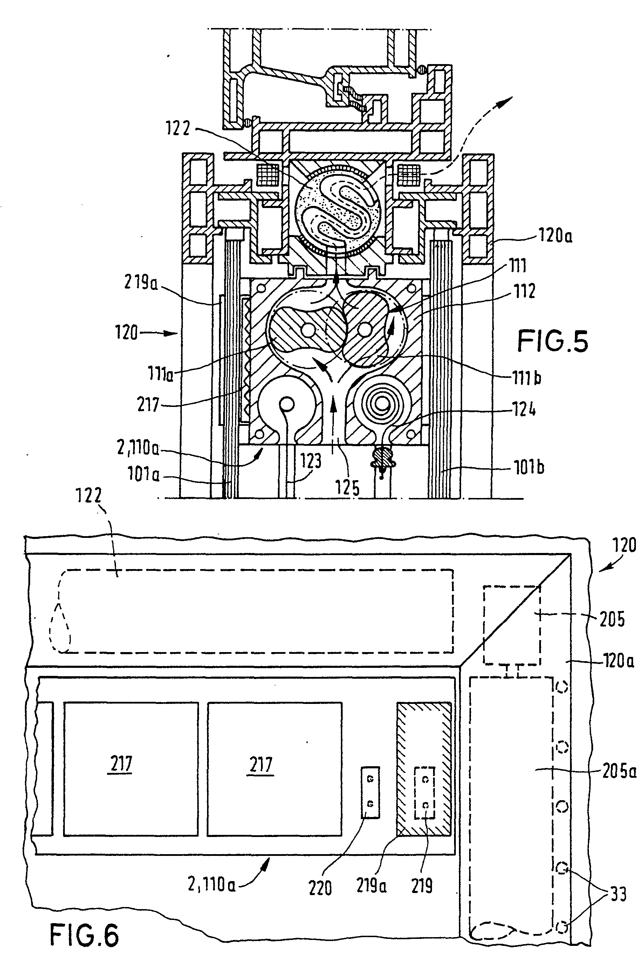

Der motorgetriebene Lüfter 111 kann in einer ersten Ausführungsform gemäß Fig. 4 ein Walzenlüfter mit am Lüfterrad sich koaxial erstreckenden Lamellen sein, er kann aber auch, wie in Fig. 5 gezeigt ist, ein Walzenlüfter mit mindestens zwei gegenläufig angetriebenen, zahnradartig ineinandergreifenden, walzenartigen Profilkörpern 111a, 111b sein, die nach dem Konstruktionsprinzip von Roots in dem Lüftergehäuse 112 koaxial nebeneinander drehbar gelagert sind und durch einen Zahnradtrieb gemeinsam angetrieben werden.

Dadurch, daß das Einbaugerät nach Fig. 5 mit einem Walzenlüfter nach dem Roots-Prinzip ausgerüstet ist, ergibt sich der besondere Vorteil, daß in betriebslosem Zustand der Luftdurchsatz durch das Gerät so gut wie ausgeschlossen ist. Auch der Schalldurchgang ist minimal. Das Walzensystem erlaubt eine problemlose Umschaltung auf Zu- oder Abluft, wobei die Menge der zu befördernden Luft einfach zu bestimmen ist und mit der Umdrehungszahl des Walzenlüfters gesteuert werden kann. Die Eigengeräuschentwicklung kann durch eine Verringerung der Drehzahl bis zur Unhörbarkeit herabgesetzt werden. Ein derartiges Gerät kann im übrigen ganz nach Bedarf in unterschiedlich abgestuften Längen hergestellt werden.

Wie in Fig. 1 bis 8 weiterhin zu erkennen ist, ist das Einbaugerät 2 als Steuereinheit mit dem motorisch betriebenen Lüfter 111 verbunden, der sich im wesentlichen über die gesamte Breite eines Fenster- oder Türelements erstreckt und zwischen die Scheiben 101a, 101b (Fig. 4 und 5) eines speziellen Verbundfensters 120 einbaubar ist, das mit je einer motorisch verstellbaren Lüftungseinheit 121, 122 im unteren und im oberen Teil eines Verbundflügels 120a ausgebildet ist. Beide Lüftungseinheiten 121, 122 sind gemäß der DE-PS 3 043 783 und der DE-PS 3 216 581 mechanisch derart miteinander verbunden, daß bei einer Verstellung einer Lüftungseinheit 121 die andere Lüftungseinheit 122 im gleichen Sinne synchron mitverstellt wird. Statt des Lüfters 111 kann bei diesem Ausführungsbeispiel auch ein in der Zeichnung nicht gezeigtes motorisch gesteuertes Luftventil vorgesehen sein, wenn der Betrieb des Gerätes mit Solarenergie für einen ständigen Lüfterantrieb nicht ausreicht.

Das Einbaugerät 2 kann weiterhin als Steuereinheit mit dem oder den Stellmotoren 202, 205 (Fig. 1, 6 und 7) von regelbaren Dauerlüftungseinrichtungen 205a mit Luftöffnungen 33 des speziellen Verbundfensters 120 verbunden sein, die auch in den senkrechten Teilen 16C, 16D des Fensterflügels angeordnet sein können. Wie in Fig. 1 bis 8 weiterhin gezeigt ist, wird ein derartiges Einbaugerät in den oberen Teil des Scheibenzwischenraumes 101c (Fig. 4) des Verbundflügels 120a waagerecht eingebaut und weist entsprechend Fig. 4 bis 8 auch mindestens eine über die gesamte Breite des Scheibenzwischenraumes 101c sich erstreckende motorisch senkrecht ein- und ausrollbare Schutzbahn 123, 124 auf.

Bei den in Fig. 4 bis 10 gezeigten Ausführungsformen derartiger Geräte können beiderseits der Luftöffnungen 125 (Fig. 4 und 5) vom Scheibenzwischenraum 101c zu dem motorisch betriebenen Lüfter 111 aufrollbare Schutzbahnen 123, 124 angeordnet sein, von denen eine erste, beschränkt durchsichtige Schutzbahn 123 mit einer zur Außenscheibe 101a des Verbundfensters 120 gerichteten, Wärmestrahlen reflektierenden Oberfläche und mit einer zur Innenscheibe 101b gerichteten, Wärmestrahlen absorbierenden Oberfläche in einem geringen Abstand von der Fensteraußenscheibe 101a angeordnet ist. Eine zweite, ebenfalls beschränkt durchsichtige Schutzbahn 124 kann mit einer zur Innenscheibe 101b des Verbundfensters 120 gerichteten, Wärmestrahlen reflektierenden Oberfläche und mit einer zur Außenscheibe 101a gerichteten, Wärmestrahlen absorbierenden Oberfläche in einem geringen Abstand von der Fensterinnenscheibe 101b angeordnet sein.

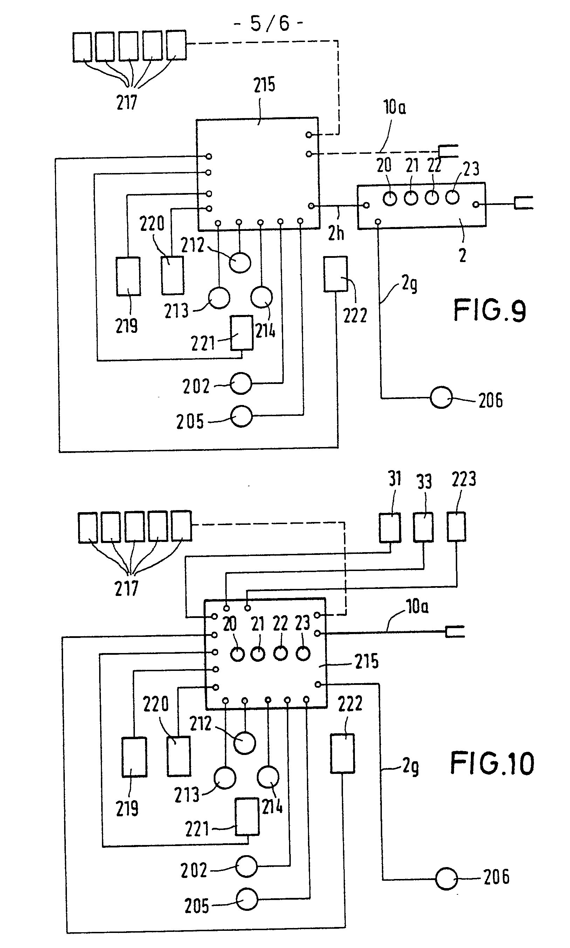

Bei einem derartigen Gerät kann weiterhin, wie in den elektrischen Blockschaltbildern von Fig. 9 bis 10 zu erkennen ist, eine Anzahl von Temperaturfühlern 219, 220, 221, 222 zur Ermittlung der Außentemperatur im Schatten (219), der Außentemperatur im Sonnenlicht (220), der Scheibenzwischen-Temperatur (221) und der Innenraumtemperatur (222) an dem gemeinsamen Gehäuse 112 angeordnet sein. Das Gerät kann an seinem Steuerteil 215 außerdem Anschlüsse für Fernfühler 31, 33, 223 zum Messen der Innenraum-Lufttemperatur (31), der Innenraum-Luftfeuchte (33) und der Schadstoffdichte (223) aufweisen. Ferner können Anschlüsse an den Stellmotor 202 der waagerechten Lüftungseinrichtungen 121, 122 und an den Stellmotor 205 für die senkrechten Dauerlüftungen 205a links und rechts am Fenster- oder Türelement vorgesehen sein.

Dabei werden die von den Temperaturfühlern 219 bis 222 erfaßten Werte im Steuerteil 215 programmgemäß verarbeitet und an den Antriebsmotor 212 des Lüfters 111, an die Antriebsmotoren 213, 214 der motorisch auf- und abrollbaren Kälteschutzbahn 123 bzw. der auf- und abrollbaren Wärmeschutzbahn 124 sowie an den Stellmotor 202 der im Fenster befindlichen waagerechten Be- und Entlüftungseinrichtungen 121, 122 und an den Stellmotor 205 für die senkrechten Dauerlüftungseinrichtungen 205a des Fensters gegeben.

Das Gerät kann auch zur Fensteraußenseite gerichtete Solarzellen 217 zur Aufladung von Batterien im Gehäuse des Gerätes aufweisen. Werden für die Energieversorgung des Gerätes Solarzellen 217 vorgesehen, so kann anstelle eines Lüftermotors 212 aus Energiegründen ein einfaches Luftventil an das Steuerteil 215 angeschlossen werden, wobei der Luftdurchsatz durch den Scheibenzwischenraum 101c durch den Temperaturfühler 221 gesteuert wird.

Bei dem Blockschaltbild von Fig. 9 kann das Steuerteil 215 durch ein Kabel 10a an eine Stromversorgungsquelle angeschlossen sein, wenn kein Klimawächter 2 mit einer Stromversorgung 2h oder Solarzellen 217 angeschlossen wird. Der Anschluß 2h an einen Klimawächter 2 kann auch drahtlos erfolgen.

Bei dem Blockschaltbild von Fig. 10 ist der Klimawächter im Steuerteil 215 integriert. Deshalb sind die Fernfühler 31, 33, 223 für Innenraum-Lufttemperatur, für Innenraum-Luftfeuchte und für die Schadstoffdichte in der Raumluft erforderlich. Der Anschluß 2g an ein Heizkörper-Thermostatventil 206 der Raumheizung ist vorgesehen. Dieser Anschluß 2g kann auch drahtlos erfolgen. Im übrigen entspricht das Schaltbild der Fig. 9.

Wird ein derartiges Gerät in Verbindung mit Räumen eingesetzt, deren Heizung durch Thermostatventile geregelt wird, so kann vom Gerät aus der Thermostat durch Fremdwärmebeeinflussung gesteuert werden. So kann z.B. vom integrierten Klimawächter aus über ein Kabel oder drahtlos ein Heizelement angeschlossen werden, das einem Thermostatventilkopf übergestülpt wird. Dieses Thermostatventil ist ganz geöffnet. Die Raumtemperatur könnte ohne die sogenannte künstliche Fremdwärmebeeinflussung auf z.B. 25°C steigen.

Der Klimawächter übernimmt die Regelung des Ventils durch das Heizgerät, das um so mehr oder weniger Wärme dem Thermostatkopf gibt, je weiter das Heizventil gedrosselt oder geöffnet werden muß, um den behaglichen Temperaturbereich des Wohn- oder Schlafklimafeldes nicht zu überschreiten oder zu unterschreiten.

Die tatsächliche oder natürliche Fremdwärmebeeinflussung, wie Sonneneinstrahlung usw., wird durch den Temperaturfühler 31 am integrierten Klimawächter erfaßt und optimal verarbeitet.

Auch wenn kein Anschluß an ein Heizkörperelement vorgenommen wird, leuchtet am Gerät mit integriertem Klimawächter eine rote (20) oder eine blaue Warnleuchte 23 auf, die den Benutzer auffordert, die Raumtemperatur zu erhöhen oder zu senken, bis die gewünschten Klimawerte sich einstellen und die Warnleuchten erlöschen.

Schließlich kann auch ein Anschluß 10a an das elektrische Stromversorgungsnetz des Innenraumes vorgesehen sein. Die Schaltung sowie die Temperaturvorwahl des integrierten Klimawächters kann sich sowohl am Gerät 2 als auch am Stromzuführungskabel 10a befinden. Das Gerät mit integriertem Klimawächter hat die Möglichkeit der individuellen Vorwahl der Raumtemperatur durch den Benutzer. Das Programm des Gerätes stellt in den Bereichen der Klimafelder z.B. für Wohnen, Schlafen und Arbeiten aus den Parametern Temperatur, Luftfeuchte und Schadstoffdichte vorrangig immer die optimalen Klimabedingungen für den Benutzer und für die Bausubstanz her und erreicht je nach Wärmeschutz des Gebäudes die größtmögliche Energieeinsparung.

Während die Warnleuchten 20, 21, 22, 23 des integrierten Klimawächters intermittierend in Tätigkeit treten, werden nach dem mikroprozessorgesteuerten Programm alle mechanischen und natürlichen Lüftungseinrichtungen am geschlossenen und dichten Fenster- oder Türelement je nach den erfaßten Klimawerten genutzt, um einerseits keinen unnötigen Lüftungswärmeverlust aus Energiespargründen zu haben, andererseits jeder Klimaneigung zum Unbehagen des Raumnutzers oder zum Schaden der Bausubstanz frühzeitig gegenzusteuern und den erforderlichen Mindestluftwechsel anzustreben.

Wenn z.B. trotz voller Ausschöpfung der automatisch technischen Möglichkeiten die relative Wohnfeuchte im Innenraum zu hoch oder zu niedrig ist, leuchten die Warnleuchten grün (21) oder grün und rot (21, 20) oder grün und blau (21, 23) permanent auf als Aufforderung für den Benutzer, durch manuelles «Lüften» oder «Lüften und Heizen» oder «Lüften und Kühlen» durch z.B. Öffnen der Fenster und «weiteres Aufdrehen» oder «Drosseln» der Heizung das gewünschte Wohn-/Schlaf-/oder Arbeitsklima wieder zu erreichen.

Wenn das Fenster zur Stoßlüftung geöffnet wird, werden automatisch gleichzeitig alle Funktionen des Gerätes unterbrochen. Wird das Fenster wieder dicht geschlossen, so werden die Klimawerte wieder gemessen und die Funktionen des Gerätes setzen sich wieder in Gang.

Das Gerät mit integriertem Klimawächter kann auf automatische Steuerung der Zu- und Abluft mit stufenloser Regelung der Umdrehungszahlen geschaltet werden. Die Steuerung des Gerätes erfolgt dann so, daß auf Entlüftung des Innenraumes geschaltet wird, wenn z.B. die Schadstoffanreicherungen der Innenraumluft zu hoch werden. Diese Reaktion hat Priorität vor allen anderen Schaltungen. Der Unterdruck im Raum verhindert eine Ausbreitung der schlechten Luft in der ganzen Wohnung und zieht temperierte Frischluft aus den Nachbarräumen nach, bis die erforderliche Luftqualität sich wieder einstellt. Reichen die technischen Möglichkeiten der Entlüftung trotzdem nicht aus, die notwendige Raumluftqualität wieder herzustellen, leuchten dann eine gelbe (22) und eine grüne Warnleuchte 21 permanent auf als Aufforderung, zusätzlich zu «lüften» durch z.B. Stoßlüftung, d.h. weites Öffnen des Fensters, bis sich eine verträgliche Raumluftqualität eingestellt hat und die Warnleuchten wieder erlöschen. Das Fenster kann geschlossen werden und das Gerät arbeitet wieder nach eigenem Programm.

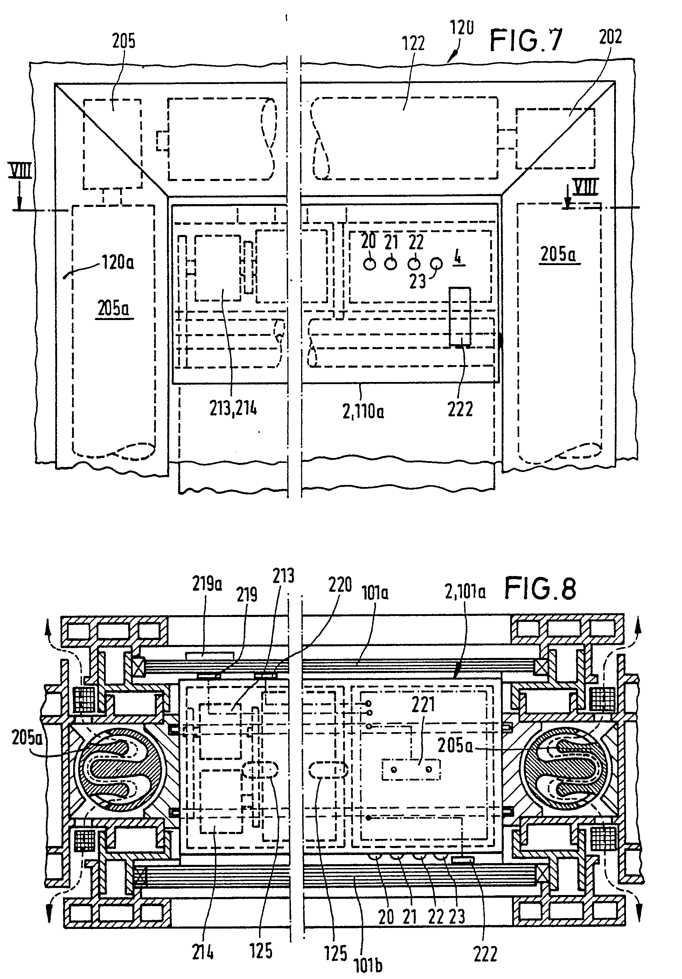

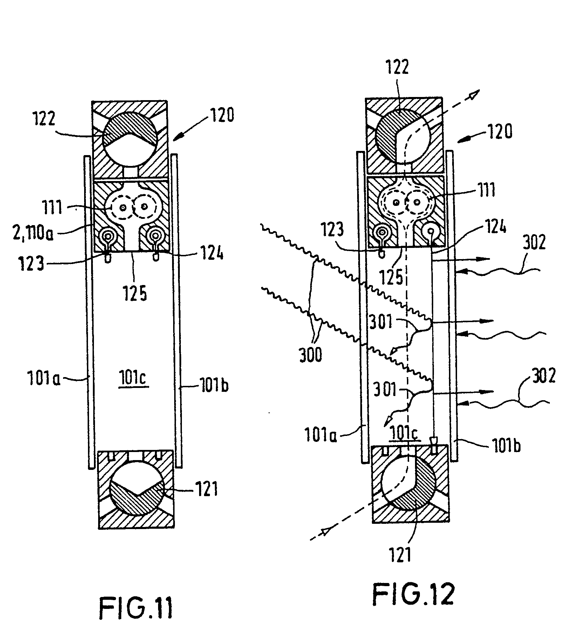

Fig. 11 zeigt noch in vereinfachter Darstellung das Beispiel einer von zahlreichen Arbeitsstellungen des speziellen Verbundfensters 120 mit dem Einbaugerät 2, 110a. Die Temperaturfühler 219, 220, 221, 222 messen die Außentemperatur im Schatten einer Schattenabdeckung 219a (Fig. 8) zwischen 14° und 20°C, die Außentemperatur ohne Abdeckung zwischen 16° und 20°C, die Lufttemperatur im Scheibenzwischenraum 101c zwischen 18° und 20°C und die Innenraum-Temperatur unter 16°C.

Die Fernfühler 31, 33, 223 des integrierten Klimawächters messen die Innenraum-Lufttemperatur mit 15°C, die relative Innenraum-Luftfeuchte mit 65% und die Schadstoffdichte unter den Konzentrationswerten, die für Menschen belastend sind.

Bei diesen Meßwerten handelt es sich um einen Tag mit bedecktem Himmel oder um eine Nacht, z.B. im Frühling oder Herbst. Die Temperatur-Vorwahl wurde vom Benutzer auf den Schlafklimabereich festgelegt; also soll ein Schlafzimmer bedient werden. Die Innenraum-Lufttemperatur ist verhältnismäßig kühl, aber zum Schlafen behaglich.

Wie Fig. 11 zeigt, ist die Scheibenzwischenraum-Durchlüftung geschlossen. Das Gerät hat beide Schutzbahnen 123, 124 eingerollt und der Lüfter ist nicht in Betrieb.

Das Fenster und das Gerät haben aufgrund des Programmes für diesen Fall die optimale Arbeitsstellung.

Fig. 12 zeigt in vereinfachter Darstellung ein Beispiel einer anderen der zahlreichen möglichen Arbeitsstellungen des speziellen Verbundfensters mit dem Einbaugerät.

Die Temperaturfühler 219, 220, 221, 222 messen die Außentemperatur im Schatten unter 14 °C, die Außentemperatur in der Sonne über 30 °C, die Lufttemperatur im Scheibenzwischenraum über 20 °C und die Innenraum-Lufttemperatur zwischen 20° und 22 °C.

Die Fernfühler 31, 33, 223 des integrierten Klimawächters messen die Innenraum-Lufttemperatur mit 21 °C und die relative Luftfeuchtigkeit des Innenraumes mit 75%. Die Schadstoffdichte liegt im verträglichen Bereich.

Es handelt sich also um einen Wintertag mit Sonnenschein auf dem Fenster. Die Temperaturvorwahl wurde vom Benutzer auf das Wohnklimafeld festgelegt. Es handelt sich z.B. um ein Wohnzimmer. Die Innenraum-Lufttemperatur ist mit 21 °C im Behaglichkeitsfeld. Die Luftfeuchtigkeit ist jedoch mit 75% relativer Feuchte zu hoch und muß durch trockene Frischluft abgesenkt werden, damit die Gefahr einer Tauwasserbildung an den Außenwänden besonders in den Raumecken vermieden wird.

Wie Fig. 12 zeigt, ist die Scheibenzwischenraum-Durchlüftung geöffnet von außen unten nach innen oben. Das Gerät hat die Wärmeschutzbahn 124 an der Innenscheibe ausgerollt und der Doppelwalzenlüfter ist in Betrieb, denn die Lufttemperatur im Scheibenzwischenraum liegt über 18 °C. Die senkrechte Dauerlüftung des speziellen Verbundfensters 120 (Fig. 8) ist geschlossen, weil die 75% Luftfeuchte durch aufgewärmte Frischluft abgebaut werden soll.

Die kurzwelligen Sonnenstrahlen 300 treten durch die Außenscheibe 101a in den Scheibenzwischenraum 101c und werden an der Wärmeschutzbahn 124 absorbiert, d.h. in langwellige Wärmestrahlung 301 verwandelt, die nicht wieder durch die Außenscheibe 101a in den Außenraum zurück gelangen kann (Treibhauseffekt). Die von außen unten in den Scheibenzwischenraum tretende kühle, trockene Frischluft wird durch die Wärmestrahlung 300, 301 aufgewärmt und, wenn sie mehr als 18 °C erreicht, durch den Doppelwalzenlüfter 111 in den Innenraum gefördert.

Die Raumwärme, die als Transmissionswärme 302 durch die Innenscheibe 101b des Fensters in den Scheibenzwischenraum 101c gelangen könnte, wird an der Wärmeschutzbahn 124 reflektiert und bleibt dem Raum erhalten.

Der Wärmedurchgangswiderstand des Fensters wird in diesem Fall unendlich groß. Mit dem Solarenergiegewinn wird das Fenster zum Strahlungsheizkörper und Warmluft-Heizelement für den Wohnraum. Die Thermostatventile werden, ob am integrierten Klimawächter 2, 215 angeschlossen oder nicht, den Wärmezufluß drosseln. Ein Energiegewinn ist gegeben und Heizkosten werden eingespart.

## Patentansprüche

1. Schall- und wärmeisolierendes Verbundfenster oder Türelement mit Blendrahmen und Verbundflügel und mit einer Schalldämmlüftung mit je einer motorisch verstellbaren Lüftungseinheit im unteren und im oberen Teil des Verbundflügels, die mit der Fenster- bzw. Türaußenseite und mit der Fenster- bzw. Türinnenseite sowie mit dem Scheibenzwischenraum verbunden sind, wobei sich im Scheibenzwischenraum mindestens eine, in der Regel zwei motorisch senkrecht auf- und abrollbare Schutzbahnen befinden, von denen sich jede im wesentlichen über die gesamte Länge oder Breite eines Fenster- oder Türelementes erstreckt, dadurch gekennzeichnet, daß die Schalldämmlüftung als Einbaugerät mit einem Steuerteil (215) und einem motorisch betriebenen Lüfter und/oder Luftventil (111) in einem langgestreckten Gehäuse (112) zur waagerechten Montage im oberen Teil des Scheibenzwischenraumes (101c) des Verbundfensters oder Türelementes (120) mit Anschluß an eine Energiequelle ausgebildet ist, und daß das Einbaugerät in seinem Steuerteil (215) eine Einrichtung zum Messen der Raumlufttemperatur, der Raumluftfeuchte und der Schadstoffkonzentration mit einem Mikroprozessor aufweist, die die gemessenen Klimawerte erfaßt und den Lüfter oder das Luftventil (111) und die Schutzbahnen (123, 124) bedarfsgerecht, entsprechend den vom Mikroprozessor berechneten Behaglichkeitskoordinaten steuert.

2. Schall- und wärmeisolierendes Verbundfenster oder Türelement nach Anspruch 1, dadurch gekennzeichnet, daß die Behaglichkeitskoordinaten im Behaglichkeitsfeld durch Programmierung des Mikroprozessors derart festgelegt sind, daß beim Erreichen von Grenzwerten, die sich aus der gemessenen Raumlufttemperatur und der relativen Luftfeuchte ergeben, elektrische Warnleuchten (20, 21, 22, 23) aufleuchten, von denen mindestens eine Warnleuchte (20) für den Hinweis HEIZEN, mindestens eine zweite Warnleuchte (23) für den Hinweis LÜFTEN, mindestens eine dritte Warnleuchte (22) für den Hinweis KÜHLEN und mindestens eine vierte Warnleuchte (22) für den Hinweis auf die Überschreitung einer verträglichen Schadstoffdichte, wie z.B. $CO_2$, in der Raumluft, vorgesehen ist.

3. Schall- und wärmeisolierendes Verbundfenster oder Türelement nach Anspruch 1 oder 2, dadurch gekennzeichnet, daß das Verbundfenster oder Türelement (120) mit je einer motorisch verstellbaren Lüftungseinheit (121, 122) im unteren und im oberen Teil des Verbundflügels (120a) ausgebildet ist, wobei beide Lüftungseinheiten (121, 122) mechanisch derart miteinander verbunden sind, daß bei einer Verstellung einer Lüftungseinheit (121) die andere Lüftungseinheit (122) im gleichen Sinne synchron mitverstellt wird (Fig. 1 bis 3).

4. Schall- und wärmeisolierendes Verbundfenster oder Türelement nach Anspruch 1, dadurch gekennzeichnet, daß das Einbaugerät in seinem Gehäuse (112) beiderseits von Luftöffnungen (125) vom Scheibenzwischenraum (101c) zu dem motorisch betriebenen Lüfter oder Luftventil (111) aufrollbare Schutzbahnen (123, 124) aufweist, von denen eine erste, beschränkt durchsichtige Schutzbahn (123) mit einer zur Außenscheibe (101a) des Verbundfensters (120) gerichteten, Wärmestrahlen reflektierenden Oberfläche und mit einer zur Innenscheibe (101b) gerichteten, Wärmestrahlen absorbierenden Oberfläche in einem geringen Abstand von der Fensteraußenscheibe (101a) angeordnet ist, und daß eine zweite, beschränkt durchsichtige Schutzbahn (124) mit einer zur Innenscheibe (101b) des Verbundfensters (120) gerichteten, Wärmestrahlen reflektierenden Oberfläche und mit einer zur Außenscheibe (101a) gerichteten, Wärmestrahlen absorbierenden Oberfläche in einem geringen Abstand von der Fensterinnenscheibe (101b) angeordnet ist.

5. Schall- und wärmeisolierendes Verbundfenster oder Türelement nach Anspruch 1, dadurch gekennzeichnet, daß das Einbaugerät eine Anzahl von Temperaturfühlern (219, 220, 221, 222) zur Ermittlung der Außen-, Innen- und Zwischenscheiben-Lufttemperatur an dem gemeinsamen Gehäuse (112) aufweist.

6. Schall- und wärmeisolierendes Verbundfenster oder Türelement nach Anspruch 1, dadurch gekennzeichnet, daß das Einbaugerät an seinem Steuerteil (215) Anschlüsse für Fernfühler (31, 33, 223) zum Messen der Innenraum-Lufttemperatur, der Innenraum-Luftfeuchte und der Schadstoffdichte aufweist.

7. Schall- und wärmeisolierendes Verbundfenster oder Türelement nach Anspruch 1, dadurch gekennzeichnet, daß das Einbaugerät Anschlüsse an Stellmotoren (202, 205) von Lüftungseinrichtungen des Verbundfensters oder Türelementes (120) aufweist.

8. Schall- oder wärmeisolierendes Verbundfenster oder Türelement nach Anspruch 1, dadurch gekennzeichnet, daß der motorgetriebene Lüfter (111) ein Walzenlüfter mit am Lüfterrad sich koaxial erstreckenden Lamellen ist.

9. Schall- und wärmeisolierendes Verbundfenster oder Türelement nach Anspruch 1, dadurch gekennzeichnet, daß der motorgetriebene Lüfter (111) ein Walzenlüfter mit mindestens zwei gegenläufig angetriebenen, zahnradartig ineinandergreifenden, walzenartigen Profilkörpern (111a, 111b) ist, die nach dem Konstruktionsprinzip von Roots in dem Lüftergehäuse (112) koaxial nebeneinander drehbar gelagert sind.

10. Schall- und wärmeisolierendes Verbundfenster oder Türelement nach Anspruch 1, dadurch gekennzeichnet, daß das Einbaugerät als Steuerteil (215) mit dem oder den Stellmotoren (202, 205) von regelbaren Dauerlüftungseinrichtungen (205a) des speziellen Verbundfensters (120) verbunden ist, die in den senkrechten Teilen (16C, 16D) des Fenster- oder Türelementes angeordnet sind.

11. Schall- und wärmeisolierendes Verbundfenster oder Türelement nach Anspruch 1, dadurch gekennzeichnet, daß das Einbaugerät zur Fenster- oder Türaußenseite gerichtete Solarzellen (217) zur Aufladung von Batterien im Gehäuse (112) aufweist.

12. Schall- und wärmeisolierendes Verbundfenster oder Türelement nach Anspruch 1, dadurch gekennzeichnet, daß das Einbaugerät einen Anschluß (10a) an das elektrische Stromversorgungsnetz des Innenraumes aufweist.

13. Schall- und wärmeisolierendes Verbundfenster oder Türelement nach Anspruch 1, dadurch gekennzeichnet, daß das Einbaugerät einen Anschluß (2h) zum sogenannten Klimawächter (2) aufweist.

14. Schall- und wärmeisolierendes Verbundfenster oder Türelement nach Anspruch 2, dadurch gekennzeichnet, daß das Einbaugerät einen Anschluß (2g) zum Heizkörperthermostatventil (206) einer Raumheizung aufweist.

**Claims**

1. Sound absorbing and heat insulating compound window or door element having a frame and compound sash and having a sound-insulated ventilation system with in each case one ventilation unit, adjustable in motorized fashion, in the lower and in the upper part of the compound sash, which ventilation units are connected to the outside of the window or door and to the inside of the window or door and to the gap between the panes, at least one, generally two, insulation webs being situated in the gap between the panes, which insulation webs can be rolled and unrolled vertically and each of which extends essentially over the entire length or breadth of a window or door element, characterized in that the sound-insulated ventilation system is designed as a built-in device having a control component (215) and a motor-operated fan and/or air valve (111) in an elongate housing (112) for horizontal mounting in the upper part of the gap (101c) between the panes of the compound window or door element (120) with a connection to an energy source, and in that the built-in device has in its control component (215) a facility for measuring the room-air temperature, the room-air humidity and the concentration of pollutants having a microprocessor which acquires the measured climate values and controls the fan or the air valve (111) and the insulation webs (123, 124) in line with requirements, in accordance with the comfort coordinates calculated by the microprocessor.

2. Sound absorbing and heat insulating compound window or door element according to Claim 1, characterized in that the comfort coordinates are fixed in such a way within the comfort zone by programming the microprocessor, that when limiting values derived from the measured room-air temperature and the relative air humidity are reached, electric warning lamps (20, 21, 22, 23) light up, of which at least one warning lamp (20) for the indication HEATING, at least one second warning lamp (23) for the indication VENTILATION, at least one third warning lamp (22) for the indication COOLING and at least one fourth warning lamp (22), for the indication that an acceptable concentration of pollutants, such as for example $CO_2$, in the room air has been exceeded, is provided.

3. Sound absorbing and heat insulating compound window or door element according to Claim 1 or 2, characterized in that the compound window or door element (120) is designed with in each case one motor-adjustable ventilation unit (121, 122) in the lower and in the upper part of the compound sash (120a), both ventilation units (121, 122) being connected mechanically to one another in such a way that when one ventilation unit (121) is adjusted, the other ventilation unit (122) is adjusted synchronously in the same direction (Figs. 1 to 3).

4. Sound absorbing and heat insulating compound window or door element according to Claim 1, characterized in that the built-in device has in its housing (112), on both sides of air openings (125) insulation webs (123, 124) which can be rolled up from the gap (101c) between the panes to the motor-operated fan or air valve (111) and of which a first, limitedly transparent insulation web (123) having a surface which faces the outer pane (101a) of the compound window (120) and reflects heat rays and having a surface which faces the inner pane (101b) and absorbs heat rays is arranged at a short distance from the outer pane (101a) of the window, and in that a second, limitedly transparent insulation web (124) having a surface, which faces the inner pane (101b) of the compound window (120) and reflects heat rays and having a surface which faces the outer pane (101a) and absorbs heat rays is arranged at a short distance from the inner pane (101b) of the window.

5. Sound absorbing and heat insulating compound window or door element according to Claim 1, characterized in that the built-in device has a number of temperature sensors (219, 220, 221, 222) for determining the outside air temperature, inside air temperature and air temperature between the panes on the common housing (112).

6. Sound absorbing and heat insulating compound window or door element according to Claim 1, characterized in that on its control component (215) the built-in device has connections for remote sensors (31, 33, 223) for measuring the indoor air temperature, the indoor air humidity and the concentration of pollutants.

7. Sound absorbing and heat insulating compound window or door element according to Claim 1, characterized in that the built-in device has connections to servo-motors (202, 205) of ventilation facilities of the compound window or door element (120).

8. Sound absorbing and heat insulating compound window or door element according to Claim 1, characterized in that the motor-driven fan (111) is a roller-type fan having lamellae extending coaxially on the fan wheel.

9. Sound absorbing and heat insulating compound window or door element according to Claim 1, characterized in that the motor-driven fan (111) is a roller-type fan having at least two roller-like profiled bodies (111a, 111b) which are driven in the opposite direction, mesh like gears and are mounted in the fan housing (112) in accordance with the Roots design in the fan housing (112) principle so as to be rotatable coaxially next to one another.

10. Sound absorbing and heat insulating compound window or door element according to Claim 1, characterized in that the built-in device is connected as control component (215) to the servomotor(s) (202, 205) of controllable permanent ventilation facilities (205a) of the special compound window (120), which facilities are arranged in the vertical parts (16C, 16D) of the window or door element.

11. Sound absorbing and heat insulating compound window or door element according to Claim 1, characterized in that the built-in device has solar cells (217) facing the outside of the window or door, for charging batteries in the housing (112).

12. Sound absorbing and heat insulating compound window or door element according to Claim 1, characterized in that the built-in device has a connection (10a) to the indoor electric power supply system.

13. Sound absorbing and heat insulating compound window or door element according to Claim 1, characterized in that the built-in device has a connection (2h) to the so-called climate monitor (2).

14. Sound absorbing and heat insulating compound window or door element according to Claim 2, characterized in that the built-in device has a connection (2g) to the heater thermostatic valve (206) of a room heating system.

**Revendications**

1. Fenêtre à vantail dédoublé ou élément de porte insonorisant(e) et calorifuge comportant un dormant, un vantail dédoublé et un dispositif de ventilation insonorisant comportant deux blocs de ventilation manœuvrables par moteur, placés l'un dans la partie inférieure du vantail dédoublé et l'autre dans la partie supérieure, qui communiquent avec le côté extérieur et le côté intérieur de la fenêtre ou de la porte et avec l'espace entre vitres, une ou plusieurs, généralement deux, bandes isolantes enroulables et déroulables verticalement par moteur se trouvant dans l'espace entre vitres et s'étendant chacune sensiblement sur toute la longueur ou la largeur d'un élément de fenêtre ou de porte, caractérisé(e) par le fait que le dispositif de ventilation insonorisant est constitué d'un appareil incorporé comportant une partie commande (215) et un ventilateur et/ou une vanne d'aération (111) actionné(e) par moteur placés dans un carter allongé (112) pour un montage horizontal dans la partie supérieure de l'espace entre vitres (101c) de la fenêtre à vantail dédoublé ou de l'élément de porte (120), avec raccordement à une source d'énergie, et que cet appareil incorporé présente dans sa partie commande (215) un moyen de mesure de la température et de l'humidité de l'air intérieur et de la concentration de polluants, comportant un microprocesseur, qui saisit les valeurs d'ambiance mesurées et commande le ventilateur ou la vanne d'aération (111) et les bandes isolantes (123, 124) suivant les besoins, d'après les coordonnées de bien-être calculées par le microprocesseur.

2. Fenêtre à vantail dédoublé ou élément de porte insonorisant(e) et calorifuge selon la revendication 1, caractérisé(e) par le fait que les coordonnées de bien-être sont fixées dans le champ de bien-être par programmation du microprocesseur de façon telle qu'à l'atteinte de valeurs limites résultant de la température mesurée de l'air intérieur et de l'humidité relative de l'air, des lampes électriques d'avertissement (20, 21, 22, 23) s'allument, et qu'il est prévu au moins une lampe d'avertissement (20) pour l'indication CHAUFFAGE, au moins une deuxième lampe d'avertissement (21) pour l'indication VENTILATION, au moins une troisième lampe d'avertissement (23) pour l'indication REFRIGERATION et au moins une quatrième lampe d'avertissement (22) pour l'indication du dépassement d'une densité supportable de polluants, comme par exemple $CO_2$, dans l'air intérieur.

3. Fenêtre à vantail dédoublé ou élément de porte insonorisant(e) et calorifuge selon l'une des revendications 1 et 2, caractérisé(e) par le fait qu'elle ou il (120) comporte deux blocs de ventilation (121, 122) manœuvrables par moteur, placés l'un dans la partie inférieure du vantail dédoublé (120a) et l'autre dans la partie supérieure, qui sont reliés mécaniquement de façon telle que, lors de la manœuvre de l'un (121), l'autre (122) soit manœuvré en synchronisme avec lui dans le même sens (fig. 1 à 3).

4. Fenêtre à vantail dédoublé ou élément de porte insonorisant(e) et calorifuge selon la revendication 1, caractérisé(e) par le fait que l'appareil incorporé présente dans son carter (112), de part et d'autre d'orifices d'air (125), des bandes isolantes (123, 124) enroulables de l'espace entre vitres (101c) au ventilateur ou à la vanne d'aération (111) actionné(e) par moteur, dont une première (123), de transparence limitée et ayant une face réfléchissant le rayonnement thermique dirigée vers la vitre extérieure (101a) de la fenêtre à vantail dédoublé (120) et une face absorbant le rayonnement thermique dirigée vers la vitre intérieure (101b), est placée à faible distance de la vitre extérieure (101a), et qu'une deuxième bande isolante (124), de transparence limitée et ayant une face réfléchissant le rayonnement thermique dirigée vers la vitre intérieure (101b) de la fenêtre à vantail dédoublé (120) et une face absorbant le rayonnement thermique dirigée vers la vitre extérieure (101a), est placée à faible distance de la vitre intérieure (101b).

5. Fenêtre à vantail dédoublé ou élément de porte insonorisant(e) et calorifuge selon la revendication 1, caractérisé(e) par le fait que l'appareil incorporé présente sur le carter commun (112) un certain nombre de capteurs de température (219, 220, 221, 222) pour la détermination de la température de l'air à l'extérieur, à l'intérieur et entre les vitres.

6. Fenêtre à vantail dédoublé ou élément de porte insonorisant(e) et calorifuge selon la revendication 1, caractérisé(e) par le fait que l'appareil incorporé présente sur sa partie commande (215) des prises pour télécapteurs (31, 33, 223) de mesure de la température et de l'humidité de l'air intérieur et de la densité de polluants.

7. Fenêtre à vantail dédoublé ou élément de porte insonorisant(e) et calorifuge selon la revendication 1, caractérisé(e) par le fait que l'appareil incorporé présente des connexions à des servomoteurs (202, 205) de dispositifs de ventilation de la fenêtre ou de l'élément de porte (120).

8. Fenêtre à vantail dédoublé ou élément de porte insonorisant(e) et calorifuge selon la revendication 1, caractérisé(e) par le fait que le ventilateur actionné par moteur (111) est un ventilateur à cylindre ayant des lamelles s'étendant coaxialement sur sa roue.

9. Fenêtre à vantail dédoublé ou élément de porte insonorisant(e) et calorifuge selon la revendication 1, caractérisé(e) par le fait que le ventilateur actionné par moteur (111) est un ventilateur à cylindres ayant au moins deux corps profilés du genre cylindre (111a, 111b) s'emboîtant à la manière de roues d'engrenage et mus en sens contraires, qui sont montés tournants l'un à côté de l'autre coaxialement dans le carter (112) suivant le principe de Roots.

10. Fenêtre à vantail dédoublé ou élément de porte insonorisant(e) et calorifuge selon la revendication 1, caractérisé(e) par le fait que l'appareil incorporé est relié, en tant que partie commande (215), au ou aux servomoteurs (202, 205) de dispositifs réglables de ventilation permanente (205a) de la fenêtre à vantail dédoublé (120) qui sont placés dans les parties verticales (16C, 16D) de l'élément de fenêtre ou de porte.

11. Fenêtre à vantail dédoublé ou élément de porte insonorisant(e) et calorifuge selon la revendication 1, caractérisé(e) par le fait que l'appareil incorporé présente des cellules solaires (217) dirigées vers le côté extérieur de la fenêtre ou de la porte pour la charge de batteries prévues dans le carter (112).

12. Fenêtre à vantail dédoublé ou élément de porte insonorisant(e) et calorifuge selon la revendication 1, caractérisé(e) par le fait que l'appareil incorporé présente une connexion (10a) au réseau d'alimentation électrique de la pièce.

13. Fenêtre à vantail dédoublé ou élément de porte insonorisant(e) et calorifuge selon la revendication 1, caractérisé(e) par le fait que l'appareil incorporé présente une connexion (2h) au contrôleur d'ambiance (2).

14. Fenêtre à vantail dédoublé ou élément de porte insonorisant(e) et calorifuge selon la revendication 2, caractérisé(e) par le fait que l'appareil incorporé présente une connexion (2g) à la vanne thermostatique de corps de chauffe (206) d'un chauffage de locaux.

FIG.1

FIG.2

FIG.3

FIG.4

FIG.5

FIG.6

FIG.7

FIG.8

FIG.9

FIG.10

FIG.11

FIG.12